# EUROPEAN PATENT APPLICATION

(11) **EP 1 990 312 A2**
(43) Date of publication of application: **12.11.2008**
(21) Application number: 08159146.3
(22) Date of filing: 03.10.2006
(51) Int. Cl.: C01B 25/26, G07D 7/12, C09K 11/77, C09K 11/02, C09C 3/06, C01F 17/00

(54) **Security pigments and the process of making thereof**

(30) Priority: 03.10.2005 US 723371 P
(62) Divisional of application: 06816112.4
(71) Applicant: SUN CHEMICAL CORPORATION, Parsippany, NJ 07054-1285 (US)
(72) Inventor: Lin, Hai Hui, Breinigsville, PA 18031 (US); Schottland, Philippe, West Chester, OH 45069 (US); Schwartz, Russell J., Montgomery, OH 45242 (US); Postle, Stephen, Glen Rock, NJ 07452 (US); Lee, Caspar, Clevedon, North Somerset BS21 7TG (GB); Sayers, William R., Cincinnati, OH 45230 (US)
(74) Representative: Vossius & Partner

(57) **Abstract**

Disclosed are methods for using color inconstancy pigments and/or dyes, such as rare earth doped color inconstancy pigments, in security applications including semi-overt and covert security application.

## Description

The invention relates to a family of color inconstancy pigments, and in particular, crystalline, highly pure, rare earth doped color inconstancy pigments. The pigments exhibit a rapid and strong color change when changing the spectral distribution of the light emitted by the illumination sources. The primary intended application is a semi-overt security feature of currencies and other secured documents.

Over the past few years, counterfeiting has become a major issue affecting companies, individuals and governments. Companies are faced with growing revenue losses due to forgery or piracy and a potential decrease in brand value. Governments are primarily concerned with tax revenue protection and Homeland Security which are both affected by document and item counterfeiting. Given the increasing technical sophistication of counterfeiters especially in recent years, traditional security features are gradually becoming irrelevant. There is an urgent need to invent new security features to stay ahead of counterfeiters. Security features can be classified into three categories, covert, semi-covert and overt. Covert applications such as IR inks and micro-tagged inks require expensive analytical (or forensic) equipments for the authentication. Semi-overt features such as micro-prints and micro-inserts can be authenticated using readily available inexpensive devices (e.g., magnifying glasses). Overt security features (or taggants) do not require the use of a specific tool or device.

Over the past decade, an abundance of covert features has been introduced on the market. However, there is a chronic shortage of novel ideas for overt and semi-overt applications and it is likely that semi-overt security features will be preferred due to ease of authentication. The present invention discloses new pigments, methods of tagging and authenticating for this particular application.

The present invention provides methods for using color inconstancy pigments, and/or dyes, preferably rare earth doped color inconstancy pigments, in security applications, and preferably in semi-overt and covert security applications. In the case of rare earth doped color inconstancy pigments, this is done by exploiting the mechanism of rare earth (RE) doped materials that have a discrete absorption band located in the visible (in particular holmium-based and neodymium-bascd doped materials) under illumination of discrete and broad spectral distribution light sources, especially tri-phosphor fluorescent light (TL84) and sunlight (D65). The color change exhibited by these color inconstancy pigments is not due to a luminescent emission. This is important as lanthanide doped phosphors are known for instance as up-converting phosphors, The color change observed for these rare earth-based color inconstancy pigments of the present invention is due to the light absorbed and/or reflected by the pigment and not from an excitation/luminescence emission process.

The present invention also provides synthesis (manufacturing) processes for making color inconstancy pigments, preferably the rare earth-based doped color inconstancy pigments that have a discrete absorption band located in the visible region of the electromagnetic spectrum, and especially those doped with holmium-based and neodymium-based materials,

The present invention also provides color inconstancy materials produced by the process of the present invention and compositions and articles made therewith. The present invention also provides compositions comprising RE elements including, but not limited to holmium, neodymium, ytterbium, dysprosium, and praseodymium-based doped color inconstancy pigments, especially those produced by the process of the present invention.

The present invention further provides methods of tagging articles with the color inconstancy pigments of the present invention comprising incorporating the taggant into a composition such as an ink, coating, paper, fiber or a polymer matrix and forming a tagged security article that exhibits extreme color inconstancy.

The present invention also provides methods of authenticating an article tagged with color inconstancy pigments including selecting a broad spectral light source and a discrete spectral light source wherein at least one emission peak of the discrete light source matches the absorption of the color inconstancy pigment.

The present invention further provides method of providing a security feature by using narrow band absorption pigments matched with specific discrete emission light sources to create an extreme color inconstancy effect.

The present invention also provides pigments/dyes that have a similar color inconstancy effect to the above color inconstancy pigments when exposed to discrete light source vs. broad light source as a result of the presence of a strong absorption band at a key wavelength of the discrete light source. Non-limiting examples include squaraine dyes/pigments that have a very narrow absorption peak that can be tuned to absorb at a key source emission wavelength.

The present invention also provides RE pigments that can be used to produce both semi-overt and covert security features. The semi-overt characteristics correspond to the color inconstancy behavior of these pigments and the covert features are associated with sharp muld-peak absorptions in the near infrared range. An example of such dual-effect pigment is the Holmium-Neodymium Phosphate material of this invention which produces an ultra color inconstancy effect when viewed broad versus discrete white light source and shows a multiple near infrared fingerprint spectrum. Near infrared fingerprints may be used for example in automated telling machine (ATM) to verify the authenticity of banknotes or cards. Note that the near-infrared peaks produced by the pigments of this invention are located in a range that is easily accessible for low cost light emitting diodes and photodetectors which makes them a very interesting solution.

Figure 1 shows the ATR reflectance curve of HoImium Phosphate (HoPO₄) fused quantum dot pigment. Key bands are at 419 nm, 455 nm, 468.89 to 487.04 nm, 540 nm, and the series of bands at 643 to 659 nm. The primary band (broad) is at 363 nm.

Figure 2 shows the X-ray diffraction pattern of the synthesized HoPO₄ pigment with the key peak at 25.8 on the 2-theta scale and an absolute intensity of 1193.

Figure 3 shows the ATR spectrum of Neodymium Phosphate (NdPO₄) fused quantum dot pigment. Key bands are at 524.7 nm, 580.1 nm, 737.3 nm, 743.7 nm, 791.7 nm, 800.0 nm, 804.3 nm, 862.7 nm, and 871.0 nm.

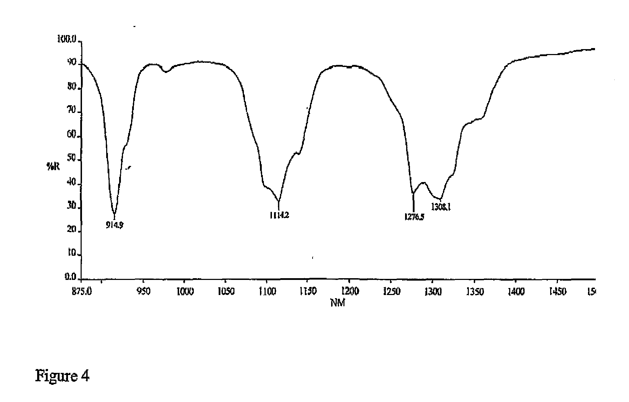

Figure 4 shows the reflectance NIR (near infrared spectrum) spectrum of dysprosium phosphate (DyPO₄). Key bands are at 453.8 nm, 760.9 nm, 811.9 nm, 827.6 nm.

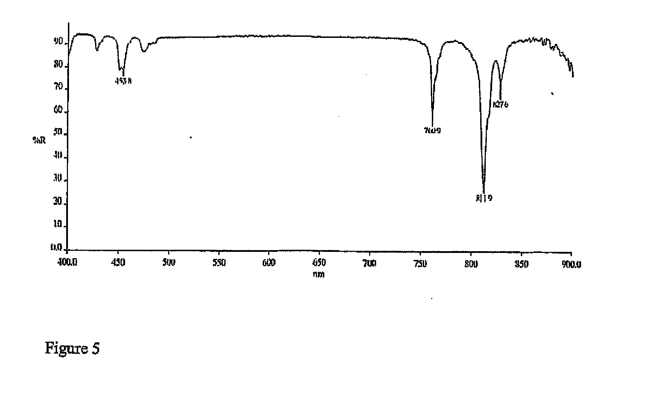

Figure 5 shows the reflectance visible spectrum of dysprosium phosphate (DyPO₄). Key bands are at 914.9 nm, 1114.2 nm, 1276.5 nm and 1348.1 nm.

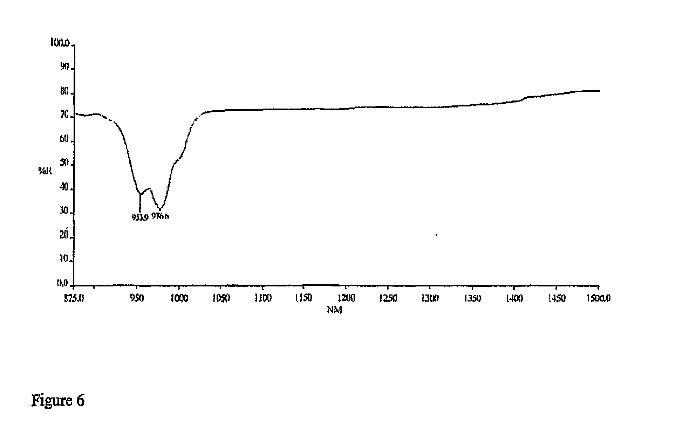

Figure 6 shows the NIR (near infrared spectrum) absorption spectrum of ytterbium sulphide/phosphate (YbPO₄) quantum dots. Key bands are at 953.9 and 976.6 nm.

### Definitions

For convenience, before further description of the present invention, certain terms employed in the specification, examples and appended claims are collected here. These definitions should be read in light of the remainder of the disclosure and understood as by a person of skill in the art. Unless defined otherwise, all technical and scientific terms used herein have the same meaning as commonly understood by a person of ordinary skill in the art.

*"Color inconstancy"* refers to the apparent change in color of a single sample under different light sources having different wavelengths. The degree of *color inconstancy* for a sample is represented by the Euclidean difference (color distance) between the corresponding color of a sample, or color coordinates calculated from the spectral curve (such as for example, remission), and the actual color of that sample measured, or computed via its color coordinates in the reference illuminant. The larger the Euclidean color distance, the greater the color inconstancy and vice-versa.

*"Extreme (ultra) color inconsistency"* is defined as an dramatic change in appearance of the pigment with a change in viewing conditions.

A *"pigment"* is a material that changes the color of light it reflects as the result of selective color absorption.

*"Quantum dots"* (QD), also known as nanocrystals, refers to semiconductors, which are crystals composed transition elements, lanthanides and actinides. Quantum dots comprise a unique class of semiconductor because of their size, which ranges from about 2 to about 10 nanometers (10-50 atoms) in diameter.

*"Rare Earth (RE) elements"* refers to the lanthanide series of elements La, Ce, Pr, Nd, Pm, Sm, Eu, Gd, Tb, Dy, Ho, Er, Tm and Yb (lanthanum, cerium, praseodymium, neodymium, promethium, samarium, europium, gadolinium, terbium, dysprosium, holmium, erbium, thulium, ytterbium). The initials 'RE' are used throughout the specification to refer to these rare earth elements.

The *"rare earth doped quantum dot color inconstancy pigment"* refers to pigments comprising a lanthanide-based material with the appropriate counterion/ligand for the oxidation state of the given lanthanide. The lanthanides include La, Ce, Pr, Nd, Pm, Sm, Eu, Gd, Tb, Dy, Ho, Er, Tm and Yb; and the counterions/ligands include, but are not limited to phosphate, oxide, sulfide, halides (fluoride, chloride, bromide), oxyhalide, carbonate, oxalate, and hydroxycarbonate. Note that lanthanide phosphates of the general formula LaPO4 are also referred to orthophosphates. These terms are to be used interchangeably in this invention. Also note that 'oxysulfide' ligands/counterions are excluded from the scope of this invention.

The *Visible Spectrum* refers to wavelengths of light from about 380 nm to about 760 nm.

A family of color inconstancy pigments has been discovered. These pigments exhibit dramatic color-change when switching from one illumination source to another, particularly between a broad spectral distribution light source (e.g., outdoor light) and a discrete spectral distribution source (e.g., indoor white fluorescent light based on a tri-phosphor lamp). This unique effect is perceived by the human eye as a "photochromic" change. Rarity of the material and the ease of authentication make this family of pigments promising materials for semi-overt security features on currencies, credit cards and secure documents in general, such as identity cards, driver licenses and passports. Although the pigments are particularly suitable for use in an ink system, they could also be used in coating or plastics applications to provide security or special effect features.

The pigments of the present invention comprise rare earth (RE) doped materials. In another embodiment, the pigments of the present invention comprise crystalline and highly pure RE doped materials, specifically including holmium, neodymium, dysprosium, praseodymium, and ytterbium doped materials. Examples include glass encapsulated holmium chloride or fluoride, glass encapsulated holmium oxide, naked and glass encapsulated holmium phosphate, naked and glass encapsulated holmium-yttrium sulfide fused quantum dot, hohnium-yttrium hydroxycarbonate fused quantum dot, and likewise for neodymium, praseodymium and yttrium and other rare earth elements. Encapsulating materials may also be various types of polymers. The holmium-based material primarily exhibits pink to yellow color transition when being switched to viewing conditions in indoor fluorescent light and outdoor sunlight, whereas neodymium-based materials exhibits blue-gray to violet color transition. The invention also covers any combination of above classes (Ho³⁺ and Nd³⁺, Pr³⁺, Yb³⁺, Y³⁺) materials (either physical blend or solid solution) for utilizing their color inconstancy characteristics.

Although color inconstancy in dyes and pigments is a known phenomenon, the materials of this invention exhibit a very strong color inconstancy effect when comparing the appearance under a broad spectral distribution light source versus a discrete spectral source (e.g., a tri-phosphor lamp). This color inconstancy effect of these materials may be attributable to both sample purity and crystallinity of the sample,

### Operating Mechanism

The operating mechanism of this particular family of pigments is based on the phenomenon of color inconstancy. A ripe apple is red in the sunlight and remains red when it is brought indoors. This is known as color constancy. Color inconstancy is defined as the change in color of a single sample under different light sources. This invention discloses a family of materials whose color inconstancy is so strong, that a shift in color with change in viewing conditions produces a dramatic change in appearance. This strong color effect may be termed "Ultra or Extreme Color Inconstancy."

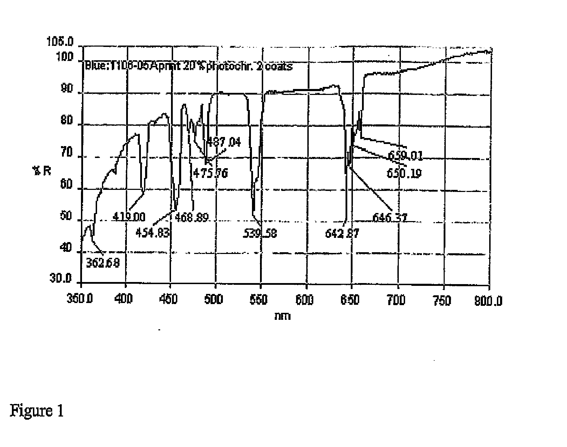

One example of an ultra color inconstancy pigment is that of fused holmium phosphate quantum dot pigment. This particular pigment is pink under regular tri-phosphor indoor fluorescent light, and immediately shifts to a yellow color, if moved under sunlight or incandescent light. This dramatic color change is attributed to pigment's sharp absorption at 530-550 nm (see Figure 1), which coincides with the discrete green emission peak of tri-phosphor fluorescent lamp at 545-555 nm.

### Applications

As security taggants, this family of pigments can be incorporated into or onto secured paper and/or fabric documents, substrates and packaging in forms on inks, coatings, laminates, inserts, etc. Given the ease of authentication, overt security features are the primary applications. The arts of making inks and coatings, as well the various printing processes (i.e., intaglio, flexo, screen, offset, gravure) are very well known in the literatures, so it is not repeated here [see "The Printing Ink Manual", 5th edition, R.H. Leach, ed. Taylor & Francis, Inc.]. Other less common printing processes include digital offset solutions such as the Hewlett-Packard Indigo presses which are used for instance in the production of security labels. Besides the topical applications such as printings or coatings, the pigments can be incorporated directly into substrates during the formation stage. For example, to a make secured substrate such as passport papers, the fine pigments can be introduced along with other regular paper fillers such as calcite, talc during paper making to fill the open pores of paper near the surface. If the substrate is of plastic, such as an Australian bill, the pigment can be introduced during the extrusion of substrate.

Due to its high temperature stability, the pigment can also be incorporated into a ceramic glaze, which can be fired into a non-scratchable mark The applications include permanent marking of high-priced ceramic, glass and porcelain artworks, engine parts, or any other valued objects with metal, glass or ceramic surfaces. Its high temperature stability will also allow for many demanding plastics applications such as extruding into polycarbonate, polyester (such as polyethyleneterephthalate) and other high performing engineering plastics and fibers.

Rare earth color inconstancy pigments may be used alone or in combination with other pigments (meaning either in the same layer or in a different layer such as an overprint), dyes or additives such as those listed in "The Printing Ink Manual" by R.H. Leach, 5th edition (ed. Taylor & Francis Inc., 1993). Traditional pigments or dyes (often referred to as colorants) would be used to alter the colored state of the article, print or coating under a certain light source. By doing so, one color inconstancy pigment can provide multiple security features that can be for example assigned to specific applications, markets, products or customers. Other than traditional colorants, special effect pigments may be used either in the same layer or applied in an adjacent layer (e.g., an overprint) to the color inconstancy pigment. One example would be the combination of color inconstancy pigments with security color shifting pigments such as the one commercialized by FlexProducts / JDS Uniphase ("Chromaflair" or "Secureshift" pigments), by Merck AG ("Securalic" pigments), or by Wacker (Helicones), The materials typically correspond to inorganic substrates with multiple layers having different refractive indices that will produce a light interference effect with incident light which translates into a viewing angle dependent color.

Security inks are broadly defined as inks used for security purposes, such as to prevent counterfeiting or unauthorized photocopying. Examples include water- and solvent chemical-fugitive inks, UV-sensitive inks, and magnetic inks. Accordingly, in another aspect, the product or product package may also include visible or invisible ink containing a particular photoreactive active compound for visualization (i.e., a 'security ink'). The photoreactive material includes ultraviolet or near infrared absorbers, fluorescent compounds and phosphors (both down-converting or up-converting) or combinations thereof. The ink may be printed in one or more locations on the product or product packaging to produce an authentication mark. In another aspect, the device includes an assembly for providing a source of light to irradiate the ink containing the light-sensitive compound on the sample product or product package, an optical detector to detect certain spectral properties emitted or absorbed by the irradiated ink and a controller to determine the authenticity of the sample product or product package by comparing the emitted or absorbed properties to a standard. It is to be appreciated that the term "authentic", or any derivative thereof, means an identification as being genuine or without adulteration or identification of point of origin or other desired information. Authentication marks are defined as follows: a] the case where the ink is printed to form very small marks (e.g. below 100 microns in size) not visible (i.e., "invisible ink") to the naked eye but that are used to encode information for example via steganography; and b] the case where the ink is printed next to or inside a colored layer that matches its color under normal lighting conditions (e.g. broad light sources). The security mark would then be revealed when the light source is switched to a different spectral distribution (e.g. a tri-phosphor) because of the contrast created between the 2 colors (i.e., "visible ink")

The ink may be applied to any substrate such as a package or product, by any technique capable of causing the ink to adhere to the substrate, including any technique by which conventional inks may be transferred. For example, any kind of printer can be used, such as a flexographic, gravure or offset press, an inkjet printer, digital offset printer, screen printing, or pad printing. Alternatively, the ink may be first applied to a decal or adhesive label which is in turn applied to the substrate. Such ink compositions and methods of detecting security features are described in U.S. patents 7,079,230; 6,786,954; 6,770,687; 6,613,137; 6,472,455; 5,983,065; 5,837,042; and 5,718,754. The entire disclosure of all applications, patents, publications, cited above and below, are herein incorporated by reference."

Water-based printing inks for use in flexographic printing processes are known in the prior art. Printing by the flexographic process requires relatively low pressure while sufficient pressure is applied to transfer the ink from the face of the image carrier to the surface of the substrate. Examples of useful water-based flexographic printing inks are disclosed in U.S. Pat. No. 4,173,554, U.S. Pat. No. 5,725,646 and The Printing Ink Manual, edited by R. H. Leach and R. J. Pierce, pages 571-576, 5th edition, (Blueprint, 1993).

Water-based inks for gravure printing are also well known. In the gravure process, the printing image is engraved into a cylinder in the form of cells which become filled with ink. Printing is achieved by passing the substrate between the gravure cylinder and impression roller under pressure. Examples of useful water-based gravure printing inks are disclosed in U.S. Pat Nos. 4,954,556 and 5,098,478.

Conventional offset lithographic printing processes, the plate is damped before it is inked with an oil-based ink. Typically, the damping process utilizes a fountain solution such as those described in U.S. Pat. Nos. 3,877,372,4,278,467 and 4,854,969.

When used in an ink or coating, the color inconstancy pigment are generally incorporated at a loading varying from 20 to 80 weight percent, with 30 to 74wt% being more desirable and 40 to 60wt% preferred. As known by those skilled in the art, adequate print thickness needs to be achieved for the security feature to be easily detectable by the naked eye. Of course, if the detection of color inconstancy is done via a machine read then lower loadings of pigment and/or thinner layers may be used.

### Some embodiments are as follows:

1) Crystalline HoPO₄ characterized by an X-ray powder diffraction pattern having peaks at about 19.5 ± 0.2, 25.8 ± 0.2, 32.7 ± 0,2, 35.1 ± 0.2, 36.9 ± 0.2, 42.3 ± 0.2, 51.5 ± 0.2 degrees two-theta.
2) The crystalline HoPO₄ of item 1 having color inconstancy characterized by a change in color from pink to yellow when changing the spectral distribution of the light emitted by the illumination sources.
3) The crystalline HoPO₄ of item 2, wherein the crystals are of a hexagonal shape.
4) A process for preparing a HoPO₄ color inconstancy pigment, comprising the steps of a) preparing a holmium solution; b) combining the holmium solution with a solution of sodium phosphate to form a rare earth - phosphate slurry; c) adding a base to the holmium-phosphate slurry; d) isolating the quantum dot pigment front the slurry; and e) heat-treating the isolated quantum dot pigment to form the color inconstancy pigment.
5) The process of item 4 wherein the heat treatment includes a calcination step to form the color inconstancy pigment.
6) The process of item 5 wherein the base is an inorganic base.
7) The process of item 6 wherein the HoPO₄ quantum dot pigment is washed after being isolated from the slurry until wash water conductivity is below about 2 S/m, prior to the calcination step.
8) The process of item 7 further comprising the step of washing the HoPO₄ quantum dot pigment with an alcohol solvent, following the washing step of item 7.
9) The process of item 8 further comprising drying the washed quantum dot pigment.
10) The process of item 5 wherein the calcined quantum dot pigment is re-slurried in a water bath after the calcination step optionally using an ultrasonic process and the resulting slurry is isolated and dried to produce the color inconstancy pigment.
11) The process of item 6 wherein the base is sodium sulfide.
12) The process of item 4 wherein the HoPO₄ color inconstancy pigment has an X-ray powder diffraction pattern with peaks at about 19.5 ± 0.2, 25.8 ± 0.2, 32.7 ± 0.2, 35.1 ± 0.2, 36.9 ± 0.2, 42.3 ± 0.2, 51.5 ± 0.2 degrees two-theta.
13) A process for preparing an encapsulated holmium phosphate color inconstancy pigment comprising the steps of a) preparing a holmium solution; b) combining the holmium solution with a solution of sodium phosphate to form a rare earth - phosphate slurry; c) adding a base to the holmium-phosphate slurry; d) isolating the quantum dot pigment from the slurry; and e) encapsulating the quantum dot pigment.
14) The process of item 13 wherein the base is an inorganic base.
15) The process of item 14 wherein the HoPO₄ quantum dot pigment is washed after being isolated from the slurry until wash water conductivity is below about 2 S/m, prior to the encapsulation step.
16) The process of item 15 further comprising the step of washing the HoPO₄ quantum dot pigment with an alcohol solvent, following the washing step of item 15.
17) The process of item 14 wherein the base is sodium sulfide.
18) The process of item 13 wherein the encapsulating material is a glass.
19) The process of item 18 wherein the glass is either silica or borosilicate.
20) The process of item 13 wherein the encapsulating material is a polymer.
21) An optically detectable security taggant comprising an encapsulated crystalline rare earth doped quantum dot color inconstancy pigment which exhibits a color-change in the visible spectrum when changing the spectral distribution of the light emitted by the illumination sources.
22) The optically detectable security taggant of item 21 wherein the rare earth doped quantum dot color inconstancy pigment comprises a lanthanide.
23) The optically detectable security taggant of item 22 wherein the rare earth doped quantum dot color inconstancy pigment comprises a lanthanide selected from the group consisting of praseodymium, neodymium, holmium, ytterbium and dysprosium.
24) The optically detectable security taggant of item 22 wherein the rare earth doped quantum dot color inconstancy pigment comprises phosphate, oxide, sulfide, chloride, fluoride, oxyhalides, carbonates and hydroxycarbonate salts of the lanthanide elements.
25) The optically detectable security taggant of item 21 wherein the encapsulation material is a glass.
26) The optically detectable security taggant of item 25 wherein the glass is selected from the group consisting of silica or borosilicate.
27) The optically detectable security taggant of item 24, wherein the rare earth doped quantum dot color inconstancy pigment is selected from the group consisting of holmium phosphate, neodymium phosphate, praseodymium phosphate and dysprosium phosphate.
28) The optically detectable security taggant of item 27, wherein the rare earth doped quantum dot color inconstancy pigment is holmium phosphate.
29) The optically detectable security taggant of item 27, wherein the rare earth doped quantum dot color inconstancy pigment is neodymium phosphate.
30) The optically detectable security taggant of item 27, wherein the rare earth doped quantum dot color inconstancy pigment is praseodymium phosphate.
31) The optically detectable security taggant of item 27, wherein the rare earth doped quantum dot color inconstancy pigment is dysprosium phosphate.
32) An optically detectable security taggant comprising a crystalline rare earth doped quantum dot color inconstancy pigment which exhibits a color-change in the visible spectrum when changing the spectral distribution of the light emitted by the illumination sources.
33) The optically detectable security taggant of item 33 wherein the rare earth doped quantum dot color inconstancy pigment comprises a lanthanide element.
34) The optically detectable security taggant of item 33 wherein the rare earth doped quantum dot color inconstancy pigment comprises a lanthanide selected from the group consisting of praseodymium, neodymium, holmium, ytterbium and dysprosium.
35) The optically detectable security taggant of item 34 wherein the rare earth doped quantum dot color inconstancy pigment comprises phosphate, oxide, sulfide, chloride, fluoride, oxyhalides, carbonates and hydroxycarbonate salts of the lanthanide elements.
36) The optically detectable security taggant of item 35, wherein the rare earth doped quantum dot color inconstancy pigment is selected from the group consisting of holmium phosphate, neodymium phosphate, praseodymium phosphate, ytterbium phosphate, and dysprosium phosphate.
37) The optically detectable security taggant of item 36, wherein the rare earth doped quantum dot color inconstancy pigment is holmium phosphate.
38) The optically detectable security taggant of item 36, wherein the rare earth doped quantum dot color inconstancy pigment is neodymium phosphate.
39) The optically detectable security taggant of item 36, wherein the rare earth doped quantum dot color inconstancy pigment is praseodymium phosphate.
40) The optically detectable security taggant of item 36, wherein the rare earth doped quantum dot color inconstancy pigment is dysprosium phosphate.
41) The optically detectable security taggant of item 36, wherein the rare earth doped quantum dot color inconstancy pigment is ytterbium phosphate.
42) A process for preparing a crystalline lanthanide element quantum dot color inconstancy pigment comprising the steps of: a) preparing a rare-earth element-based solution; b) combining the rare-earth element-based solution with an appropriate salt solution to form a desired rare earth - salt slurry; c) adding a base to the rare earth-phosphate slurry; d) isolating the quantum dot pigment from the slurry; and e) heat-treating the isolated quantum dot pigment.
43) The process of item 42 wherein the base is an inorganic base.
44) The process of item 43 wherein the rare earth color inconstancy pigment is isolated from the slurry and washed until wash water conductivity is below about 2 S/m, prior to the heat treatment of step e).
45) The process of item 44 further comprising the step of washing the rare earth color inconstancy pigment with an alcohol solvent, following the washing step of item 44.
46) The process of item 45 further comprising drying the quantum dot pigment.
47) The process of item 46 wherein the calcined quantum dot pigment is re-slurried in a water bath optionally using an ultrasonic process and the resulting slurry is washed and dried to produce the color inconstancy pigment.
48) The process of item 42 wherein the base is sodium sulfide.
49) The process of item 42 wherein the heat treatment is a calcination step.
50) The process of item 42 wherein the crystalline rare-earth element quantum dot color inconstancy pigment comprises a lanthanide selected from the group consisting of praseodymium, neodymium, holmium, ytterbium and dysprosium.
51) The process of item 50 wherein the crystalline rare-earth element quantum dot color inconstancy pigment comprises phosphate, oxide, sulfide, chloride, fluoride, oxyhalide, carbonates and hydroxycarbonate salts of the lanthanide elements.
52) The process of item 51 wherein the crystalline rare-earth element quantum dot color inconstancy pigment is selected from the group consisting of holmium phosphate, neodymium phosphate, praseodymium phosphate, ytterbium phosphate and dysprosium phosphate.
53) A security article comprising an optically detectable security taggant comprising a crystalline rare earth doped quantum dot color inconstancy pigment which exhibits a color-change in the visible spectrum when changing the spectral distribution of the light emitted by the illumination sources.
54) The security article of item 53 wherein the optically detectable security taggant is encapsulated.
55) The security article of item 53, wherein the security article comprises paper and/or fabric documents, ceramics, plastics, substrates and packaging in forms of inks, coatings, laminates, and inserts, and combinations thereof.
56) The security article of item 53, wherein the crystalline rare earth doped quantum dot color inconstancy pigment comprises phosphate, oxide, sulfide, chloride, fluoride, oxyhalide, carbonate and hydroxycarbonate salts of the lanthanide elements.
57) The security article of item 56 wherein the rare earth element is selected from the group consisting of praseodymium, neodymium, holmium, ytterbium and dysprosium.
58) The security article of item 56 wherein the crystalline rare earth doped quantum dot color inconstancy pigment is selected from the group consisting of holmium phosphate, neodymium phosphate, praseodymium phosphate, ytterbium phosphate and dysprosium phosphate.
59) A method of authenticating an article tagged with an optically detectable security taggant of item 21, said method comprising selecting a broad spectral light source for illuminating the security taggant and a discrete spectral light source wherein at least one emission peak of the discrete light source matches the absorption of the color inconstancy pigment.
60) A method of authenticating an article tagged with an optically detectable security taggant of item 32, said method comprising selecting a broad spectral light source for illuminating the security taggant and a discrete spectral light source wherein at least one emission peak of the discrete light source matches the absorption of the color inconstancy pigment.
61) Crystalline HoPO₄, when prepared by the process comprising the steps of: a) preparing a holmium solution; b) combining the holmium solution with a solution of sodium phosphate to form a rare earth - phosphate slurry; c) adding a base to the holmium-phosphate slurry; d) isolating the quantum dot pigment from the slurry; and e) heat-treating the isolated quantum dot pigment.
62) The process of item 61 wherein the heat treatment is a calcination step.
63) The process of item 62 wherein the base is an inorganic base.
64) The process of item 63 wherein the HoPO₄ color inconstancy pigment is washed after isolation until wash water conductivity is below about 2 S/m, prior to the calcination step.
65) The process of item 64 further comprising the step of washing the HoPO₄ quantum dot pigment with an alcohol solvent, following the washing step of item 64.
66) The process of item 65 further comprising drying the quantum dot pigment.
67) The process of item 66 wherein the gel is re-slurried in a water bath and the resulting slurry is washed and dried to produce the pigment.
68) The process of item 61 wherein the base is sodium sulfide.
69) The crystalline HoPO₄ of item 61, wherein the HoPO₄ has an X-ray powder diffraction pattern with peaks at about 19.5 ± 0.2, 25.8 ± 0.2, 32.7 ± 0.2, 35.1 ± 0.2, 36.9 ± 0.2, 42.3 ± 0.2, 51.5 ± 0.2 degrees two-theta.
70) A crystalline rare earth doped lanthanide salt material having a color inconstancy and exhibiting a color-change in the visible spectrum when exposed to changing spectral distributions of light emitted from an illumination source.
71) The crystalline rare earth lanthanide salt material of item 70 wherein the lanthanide is selected from the group consisting of praseodymium, neodymium, holmium, ytterbium and dysprosium and the salt is independently selected from the group consisting of phosphate, oxide, sulfide, chloride, fluoride, oxyhalide, carbonate and hydroxycarbonate salts.
72) The crystalline rare earth lanthanide salt material of item 71 wherein the lanthanide is praseodymium and the salt is phosphate.
73) The crystalline rare earth lanthanide salt material of item 71 wherein the lanthanide is neodymium and the salt is phosphate.
74) The crystalline rare earth lanthanide salt material of item 71 wherein the lanthanide is dysprosium and the salt is phosphate.
75) The crystalline rare earth lanthanide salt material of item 71 wherein the lanthanide is ytterbium and the salt is phosphate.
76) The crystalline rare earth lanthanide salt material of item 71 wherein the lanthanide is holmium and the salt is phosphate.
77) A crystalline rare earth co-doped lanthanide salt material having a color inconstancy and exhibiting a color-change in the visible spectrum when exposed to changing emission wavelengths of an illumination source.
78) The crystalline rare earth co-doped lanthanide salt material of item 77 wherein the lanthanide is selected from the group consisting of praseodymium, neodymium, holmium, ytterbium and dysprosium and the salt is independently selected from the group consisting of phosphate, oxide, sulfide, chloride, fluoride, carbonate and hydroxycarbonate salts.
79) The crystalline rare earth co-doped lanthanide salt material of item 78 wherein the co-doped lanthanide is praseodymium and neodymium and the salt is phosphate.
80) The crystalline rare earth co-doped lanthanide salt material of item 78 wherein the co-doped lanthanide is praseodymium and holmium and the salt is phosphate.
81) The crystalline rare earth co-doped lanthanide salt material of item 78 wherein the co-doped lanthanide is neodymium and holmium and the salt is phosphate.
82) The crystalline rare earth co-doped lanthanide salt material of item 78 wherein the co-doped lanthanide is dysprosium and holmium and the salt is phosphate.
83) The crystalline rare earth co-doped lanthanide salt material of item 78 wherein the co-doped lanthanide is ytterbium and holmium and the salt is phosphate.
84) The crystalline rare earth co-doped lanthanide salt material of item 78 wherein the co-doped lanthanide is praseodymium and ytterbium and the salt is phosphate.
85) The crystalline rare earth co-doped lanthanide salt material of item 78 wherein the co-doped lanthanide is praseodymium and dysprosium and the salt is phosphate.
86) The crystalline rare earth co-doped lanthanide salt material of item 78 wherein the co-doped lanthanide is dysprosium and ytterbium and the salt is phosphate.
87) A security ink comprising the optically detectable security taggant of item 21 and a photoreactive material which can be visually detected,
88) The security ink of item 87, wherein the ink is applied to form a visible authentication mark.
89) The security ink of item 87 wherein the ink is applied to form an invisible authentication mark.
90) The security ink of item 87 wherein the photoreactive material is selected from the group consisting of UV absorbing materials, near infrared absorbing materials, fluorescent materials, phosphorescent materials, and combinations thereof.
91) The security ink of item 87 wherein the ink may be printed in one or more locations on a product or product packaging to produce an authentication mirk.
92) A security ink comprising the optically detectable security taggant of item 32 and a photoreactive material which can be visually detected.
93) The security ink of item 92 wherein the ink is visible.
94) The security ink of item 92 wherein the ink is invisible.
95) The security ink of item 92 wherein the photoreactive material is selected from the group consisting of UV absorbing materials, near infrared absorbing materials, fluorescent materials, phosphorescent materials, and combinations thereof.
96) The security ink of item 92 wherein the ink may be printed in one or more locations on a product or product packaging to produce an authentication mark.
97) A dual method of authenticating an article tagged with the security taggant of item 77 , said method comprising: a) selecting a broad spectral light source for illuminating the security taggant and a discrete spectral light source wherein at least one emission peak of the discrete light source matches the absorption of the color inconstancy pigment for viewing a visible color inconstancy change; and b) visualizing the near infrared fingerprint spectrum of the taggant as an additional covert security feature.
98) A dual method of authenticating an article tagged with the security taggant of item 81 , said method comprising: a) selecting a broad spectral light source for illuminating the security taggant and a discrete spectral light source wherein at least one emission peak of the discrete light source matches the absorption of the color inconstancy pigment for viewing a visible color inconstancy change; and b) visualizing the near infrared fingerprint spectrum of the taggant as an additional covert security feature.
99) A security ink comprising the optically detectable security taggant of item 21 wherein the taggant has a loading weight from about 20% w/w to about 80% w/w.
100) The taggant of item 99 wherein the loading weight is from about 30% w/w to about 70% w/w.
101) The taggant of item 100 wherein the loading weight is from about 40% w/w to about 60% w/ŵ.
102) A security ink comprising the optically detectable security taggant of item 32 wherein the taggant has a loading weight from about 20% w/w to about 80% w/w.
103) The taggant of item 102 wherein the loading weight is from about 30% w/w to about 70% w/w.
104) The taggant of item 103 wherein the loading weight is from about 40% w/w to about 60% w/w.
105) A process for preparing a crystalline holmium oxide quantum dot pigment comprising the steps of: a) precipitating holmium nitrate from a solution of LiOH/Ethanol; b) adding sodium hexametaphosphate to the product of step a) to form the crystalline holmium oxide quantum dot pigment which exhibits the ultra-color inconstancy effect with a pink-yellow transition, when changing the spectral distribution of the light emitted by the illumination sources,
106) An optically detectable security taggant comprising a holmium-doped yttria ceramic color inconstancy pigment which exhibits a color-change in the visible spectrum when changing the spectral distribution of the light emitted by the illumination sources.
107) The crystalline rare earth doped lanthanide salt material of item 70 wherein the material is encapsulated.
108) The crystalline rare earth lanthanide salt material of item 71 wherein the lanthanide is praseodymium, and the salt is independently selected from the group consisting of phosphate, oxide, sulfide, chloride, fluoride, oxyhalide, carbonate and hydroxycarbonate salts.
109) The crystalline rare earth lanthanide salt material of item 71 wherein the lanthanide is neodymium and the salt is independently selected from the group consisting of phosphate, oxide, sulfide, chloride, fluoride, oxyhalide, carbonate and hydroxycarbonate salts.
110) The crystalline rare earth lanthanide salt material of item 71 wherein the lanthanide is holmium and the salt is independently selected from the group consisting of phosphate, oxide, sulfide, chloride, fluoride, oxyhalide, carbonate and hydroxycarbonate salts.
111) The crystalline rare earth lanthanide salt material of item 71 wherein the lanthanide is ytterbium and the salt is independently selected from the group consisting of phosphate, oxide, sulfide, chloride, fluoride, oxyhalide, carbonate and hydroxycarbonate salts.
112) The crystalline rare earth lanthanide salt material of item 71 wherein the lanthanide is dysprosium and the salt is independently selected from the group consisting of phosphate, oxide, sulfide, chloride, fluoride, oxyhalide, carbonate and hydroxycarbonate salts.
113) The crystalline rare earth co-doped lanthanide salt material of item 77, wherein the material is encapsulated.
114) The crystalline rare earth co-doped lanthanide salt material of item 78 wherein the lanthanide is selected from the group consisting of praseodymium, neodymium, holmium, ytterbium and dysprosium and the salt is a phosphate.
115) The crystalline rare earth co-doped lanthanide salt material of item 78 wherein the lanthanide is selected from the group consisting of praseodymium, neodymium, holmium, ytterbium and dysprosium and the salt is an oxide.
116) The crystalline rare earth co-doped lanthanide salt material of item 78 wherein the lanthanide is selected from the group consisting of praseodymium, neodymium, holmium, ytterbium and dysprosium and the salt is a sulfide.
117) The crystalline rare earth co-doped lanthanide salt material of item 78 wherein the lanthanide is selected from the group consisting of praseodymium, neodymium, holmium, ytterbium and dysprosium and the salt is a chloride.
118) The crystalline rare earth co-doped lanthanide salt material of item 78 wherein the lanthanide is selected from the group consisting of praseodymium, neodymium, holmium, ytterbium and dysprosium and the salt is a fluoride.
119) The crystalline rare earth co-doped lanthanide salt material of item 78 wherein the lanthanide is selected from the group consisting of praseodymium, neodymium, holmium, ytterbium and dysprosium and the salt is a carbonate.
120) The crystalline rare earth co-doped lanthanide salt material of item 78 wherein the lanthanide is selected from the group consisting of praseodymium, neodymium, holmium, ytterbium and dysprosium and the salt is a hydroxycarbonate.

### Synthesis of RE Doped Novel Color Inconstancy Pigments

Several classes of RE doped color inconstancy pigments are provided in this application. These pigments include:
1. Naked RE sulfide fused quantum dot, and its glass encapsulated counterparts;
2. Naked RE-yttrium co-doped sulfide quantum dot, and their glass encapsulated counterparts;
3. Glass encapsulated RE oxide nanocomposite;
4. Glass encapsulated RE fluoride nanocomposite;
5. Glass encapsulated RE chloride nanocomposite;
6. RE-yttrium co-doped hydroxycarbonate fused quantum dot;
7. Holmium doped yttria ceramic;
8. Glass encapsulated RE orthophosphates, including holmium orthophosphate (HoPO₄) and neodymium orthophosphate (NdPO₄) (also referred to as 'holmium phosphate' and 'neodymium phosphate');
9. Naked RE orthophosphates, including holmium phosphate (HoPO₄) and neodymium orthophosphate (NdPO₄) (also referred to as 'holmium phosphate' and 'neodymium phosphate');

The compositions and procedures are given below as examples.

### Example 1 Holmium Phosphate Fused Quantum Dot Pigment

The synthesis pathway consists of three basic steps:
1. Formation of polyphosphate stabilized RE precursor slurry by reverse-strike process (i.e., adding to precipitant solution).
2. Formation of RE sulfide quantum dot by regular-strike process (i.e., adding precipitant to the solution).
3. Aggregation and Fusing of quantum dot via a series of purifications and thermal treatments.

### Precursor Formulation Recipe for Holmium-based Fused Quantum Dot Pigment

| Chemical Name | CAS# | Purity | MW | Mole |
|---|---|---|---|---|
| Ho(NO₃)₃ •5.4H₂O | 10168-82-8 | 99.9% | 448 | 0.06 |
| NaPO₃ | 68915-31-1 | Prac Gd | 102 | 0.24 |
| Na₂S.9H₂O | 1313-84-4 | 99.9% | 240 | 0.099 |

A 0.6M holmium solution is pumped slowly into a solution of sodium phosphate to form a 0.15M rare earth - 0.6M phosphate slurry. Sodium sulfide (0.5M) is then slowly pumped into the RE-phosphate slurry under agitation over a period of 2 hours. The solution is then aged for 48 hours without agitation until it becomes a light gray opaque paste. This aging is an optional step as there are also alternative methods of drying the sample. The quantum dots settled by centrifugation are washed with water to remove excess sodium sulfide and other salts. The quantum dots are reslurried and recentrifuged until the wash water conductivity is below 2 S/m. A final wash with ethanol produces a pellet of translucent pink gel. Drying the pellet in a vacuum oven (80°C, 25" head) shrinks the pellet to a translucent glassy mass. The quantum dots are then calcinated in a porcelain crucible at 1100°C for at least 2 hours, where the mass becomes denser and develops a deeper color. The product is released from the crucible by sonication in a water bath. The resulting water slurry is collected and washed in ethanol before drying at 60°C to produce a dry pigment. Optional dry mechanical milling may be performed at this point.

This substance produces narrow and intense absorption bands at 419 nm, 455 nm, 469 to 487 nm, 540 nm and a series of bands at 643 nm to 659 nm. The primary (and somewhat broad) absorption band is at approximately 363nm. The color of the material is pink under tri-phosphors fluorescent light and changes to a pale yellow under incandescent light.

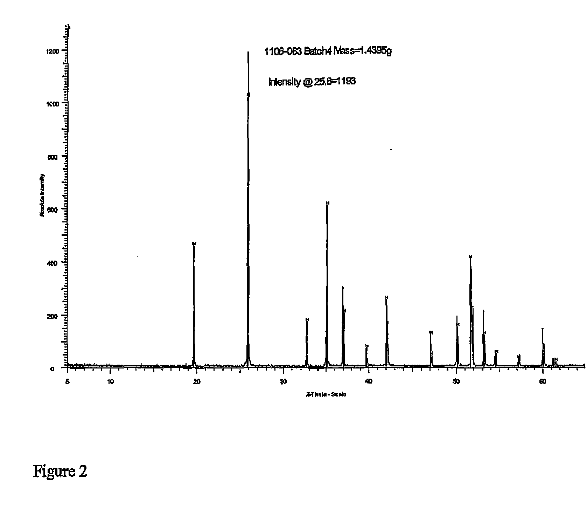

The X-Ray diffraction pattern of the synthesized pigment taken with a Siemens 505 X-Ray diffractometer indicates that the material is essentially composed of Holmium phosphate (HoPO₄), Fig. 2. Purity data from sample:

| **Sample** | Holmium (%) | Sulfur (%) | Sodium (%) | Phosphorus (%) |
|---|---|---|---|---|
| Prepared HoPO₄ | 62.1 | 0.11 | 1.1 | 13.8 |
| HoPO₄* | 63.4 | 0 | 0 | 11.9 |

| | | | | |
|---|---|---|---|---|
| * Theoretical values for pure Holmium Phosphate | | | | |

### Example 2 Encapsulated Holmium Phosphate Fused Quantum Dot Pigment

Encapsulation provides a barrier to holmium phosphate-sulfide QD. It provides the benefits of reduced moisture sensitivity, reduced pH sensitivity and universal compatibility with all solvent systems, which are essential for the demanding applications such as currency printing. Given the abrasive nature of naked holmium phosphate-sulfide QD, there is potentially an added benefit of less wear and tear to the printing plate due to the soft glass capsule. The synthesis process is identical to example 1 until the ethanol wetted pellet is recovered from the centrifuge, This wet "presscake'" with a typical dry content of 10%-13% wt is the starting material for encapsulation. The encapsulation glass can be pure silica or borosilcate. The encapsulation process is a heterogeneous sol-gel process with TEOS (tetraethyl orthosilicate) as glass precursor, or TEDS+TMB (trimethylborate) as in the case of borosilicate capsule. The example given below is a borosilicate encapsulation process, with a borate-silicate molar composition of *78*/*22,* for its excellent glass transparency.

| **Name** | **MW** | **Mass (g)** | **%Mass** | **Mole** |
|---|---|---|---|---|
| TEOS (tetraethyl borosilicate) | 208 | 5 | 35.2% | 0.024 |
| TMB (trimethylborate) | 104 | 0.7 | 4,9% | 0.0068 |
| Ethanol | 46 | 5.5 | 38.7% | 0.12 |
| CH₃COOH | 60 | 0.144 | 1% | 0,0024 |
| Water | 18 | 2.16 | 15.2% | 0.12 |
| DMF (dimethyl formamide) | 73 | 0.7 | 4.9% | 0.0096 |
| | | 14.2g | 100% | |

| | | | | |
|---|---|---|---|---|
| • TEOS/AAc =1:0.1 • TBOS/EtOH/Water/DMF=1:5:5:0.4 • TEOS/TMB = 78/22 | | | | |

Procedure for Making Glass Encapsulated Holmium Phosphate Fused Quantum Dot:
**1. Prepare borosilicate glass precursor solution:** The solution is prepared under agitation following the addition order of
   water→DMF→CH₃COOH→Ethanol→TEOS→TMB.
**2. Mixing precursor solution with Ethanol wetted Quantum Dot "Presscake":** Homogeneous slurry (paste) of presscake and precursor solution is prepared by blending at a pre-determined ratio to give a mixture that will be about 10 part presscake + 2 part precursor. The borosilicate to Ho QD weight ratio is 1:5 to 1:3
**3. Gelation and Drying:** The paste is then placed into a flat tray and dried in oven between 60°C-80°C for 4-7 days forming a monolithic glassy mass.
**4. Calcination:** The glassy mass is calcined at 110°C for a minimum of 2 hours.
   The final material is of dense and hard granule form.
**5. Milling (optional):** The material can be prepared into a fine pigment form by conventional milling processes such as dry ball milling or circulating wet medium milling.

### Example 3 Holmium-Yttrium Co-Doped Fused Phosphate/Sulfide Quantum Dot Pigment

The synthesis procedure is similar to example 1. The only difference is that part of holmium nitrate salt is replaced with lower cost yttrium nitrate salt. Yttrium compounds are known for their transparency. The rationale for doping holmium into a transparent matrix is to boost absorption efficiency on per mole of holmium ion base.

### Formulation Recipe for Holmium-Yttrium phosphate based fused quantum dots.

| **Chemical Name** | **CAS#** | **Purity** | **MW** | **Mole** | **Intended Mass (g)** |
|---|---|---|---|---|---|
| Y(NO₃)₃ • 6H₂O | 13494-98-9 | 99.9% | 383 | 0.048 | 18.4 |
| Ho(NO₃)₃ • 6H₂O | 10168-82-8 | 99.9% | 459 | 0.012 | 5.5 |
| NaPO₃* | 68915-31-1 | Prac Gd | 102 | 0.24 | 24.5 |
| Na₂S.9H₂O | 1313-84-4 | 99.9% | 240 | 0.099 | 23.8 |

The material exhibited similar absorption characteristics as example 1 and 2.

### Example 4 Glass Encapsulated Holmium Oxide Nanocomposite

The rationale for glass encapsulation is to provide barrier function to holmium oxide. It will provide the benefits of reduced moisture sensitivity, reduced pH sensitivity and universal compatibility with all solvent systems, which are essential for demanding applications such as currency printing. Holmium oxide nanophases are formed in situ inside the glass matrix. The glass precursor can be TEOS, or a combination of TEOS and TMB. The preferred holmium precursor is nitrate due to its high solubility in water/ethanol mixture. Less soluble RE precursors like acetate, oxalate or acetoacetonate can also be used if doping level is low. A typical compositional recipe is given below as an example.

### Precursor Formulation for 40[½ Ho₂O₃]-60SiO₂ Pigment

| **Name** | **MW** | **Mass (g)** | **%Mass** | **%mole(end)** | **Mole** |
|---|---|---|---|---|---|
| TEOS | 208 | 12.48 | 19.0% | 60% | 0.06 |
| Ho(NO₃)₃.5H₂O | 441 | 17.64 | 26.8% | 40% | 0.04 |
| CH₃COOH (AAc) | 60 | 1.08 | 1.6% | | 0.018 |
| Ethanol | 46 | 22.1 | 33.6% | | 0.48 |
| H₂O | 18 | 10.8 | 16.4% | | 0.6 |
| DMF (dimethylformamide) | 73 | 1.75 | 2.66% | | 0.024 |
| Total | | 65.85g | 100% | | 0.1 |

| | | | | | |
|---|---|---|---|---|---|
| • TEOS/Ethanol/water/AAc= 1.8:10:0.3 for overall composition • DMF/TEOS =0.4, AAc/RE =0.45:1 • MW of SiO₂ = 60, MW of Ho₂O₃ = 378 • Expected Dry Gel Mass = Ho(NO₃)₃ + SiO2 = 14.04+ 4.2 =18.24g | | | | | |

Expected Final Glass-ceramic Mass = 4.2g SiO₂ + 5.67g Ho₂O₃ = 9.87g

### Operational Procedure for Making Glass Encapsulated Ho₂O₃

The operating procedure is as follows:
**1. Prepare Glass Precursor:** Mix ethanol, DMF, water, acetic acid and TEOS together following the recipe given above. Stir the solution for half hour to complete the hydrolysis. The final solution should be clear, and of one phase (i.e., no water/ TEOS phase separation).
**2. Prepare Dopant Solution:** Dissolve holmium nitrate salt in water/ethanol mixture by agitation
**3. Mixing:** Pump glass precursor solution into dopant solution slowly under agitation, and let stir for another hour.
**4. Gelation and Drying:** Pump final precursor solution into drying trays with perforated lids (i.e., a controlled evaporating vessel). The aliquot height should be less than 0.5 cm to minimize thermal stress during drying. A typical gelation and drying is holding at 60°C for 5 days, and then 80°C for 5 days, followed by 2 days at 140°C. At the end of this step, the solution will turn into a dense and transparent glass.
**5. Calcination and Densification:** A typical calcination is 1°C/min to 950°C and then ramp to 1100°C in one hour and hold for 2 hours. The final material is of dense and soft granule form.
**6. Milling:** The material can be prepared into pigment form by conventional milling processes such as dry ball milling or circulating wet medium milling. For dry ball milling, 3/16" to 1/8" Burundum porcelain media or yttrium fortified zirconia media are recommended. For wet milling, 0.3mm-0.5mm yttrium fortified zirconia media is recommended.

### Example 5 Glass Encapsulated Holmium Fluoride Nanocomposite Pigment

The rationale for glass encapsulation is to provide barrier function to holmium fluoride. It will provide the benefits of reduced moisture sensitivity, reduced pH sensitivity and universal compatibility with all solvent systems, which are essential for demanding applications such as currency printing. Holmium fluoride nanophases are formed *in situ* inside the glass matrix. The glass precursor can be TEOS, or a combination of TEOS and TMB. One example of such formulation is given below, The operating procedure is similar to example 4, so it is not repeated here. The only difference is that TFA is used in place of acetic acid and the amount is substantially larger.

### Precursor Formulation for Pigment

| Name | MW | Mass (g) | %Mass | %mole (end) | Mole |
|---|---|---|---|---|---|
| TEOS | 208 | 22.48 | 20.6% | | 0.108 |
| Ho(CH₃COO₃)₃.H₂O (SA) | 360 | 14.4 | 13.2% | | 0.04 |
| CF₃COOH (TFA) | 114 | 12 | 11.0% | | 0.105 |
| Ethanol | 46 | 27.6 | 25.3% | | 0.6 |
| H₂O | 18 | 31 | 28.4% | | 1.72 |
| DMF | 73 | 1.75 | 1.6% | | 0.024 |
| Total | | 109.2g | 100% | | 0.148 |

| | | | | | |
|---|---|---|---|---|---|
| • Theoretical Final Mass: HoF₃= 8.88g, SiO₂ = 6.48g → Total = 15.36g • TFA/RE=2.6 • Dissolution Liquid Composition: 28/72 mixture of TFA/H₂O by weight | | | | | |

### Example 6 Glass Encapsulated Holmium Chloride Nanocomposite

The entire synthesis procedure is similar to example 4, except that trichloroacetic acid is used in place of TFA, and the calcination temperature is substantially lower. The maximum calcination temperature is 500°C. At above this temperature, HoCl₃ will gradually turn into Ho₂O₃ due to the loss of chloride as HCl gas. Due to the low annealing temperature (i.e., 500°C vs. 1100°C), this pigment is more porous than pigments of example 1 to 5. A typical recipe is given below.
Precursor Formulation for 30HoCl₃-70SiO₂ Pigment

| Name | MW | Mass (g) | %Mass | %mole (end) | Mole |
|---|---|---|---|---|---|
| TEOS | 208 | 14.56 | 18.9% | 70% | 0.07 |
| Ho(CH₃COO₃)₃.H₂O | 360 | 10.8 | 14.0% | 30% | 0.03 |
| CCl₃COOH (TCA) | 163 | 14.67 | 19.0% | | 0.09 |
| Ethanol | 46 | 16.1 (8+8.1) | 20.9% | | 0.35 |
| H₂O | 18 | 18.9 | 24.5% | | 1.05 |
| DMF | 73 | 2.04 | 2.7% | | 0.028 |
| Total | | 77.07g | 100% | | 0.1 |

| | | | | | |
|---|---|---|---|---|---|
| • MW of HoCl₃ =271, MW of SiO₂ = 60, MW of Ho(TCA)₃ = 651 • Expected Dry Gel Mass = Ho(TCA)₃ + SiO2=19.53 + 4.2 = 23.73 • Expected Final Glass-ceramic Mass = 4,2g SiO₂ + 8.13HoCl₃ = 12.33g | | | | | |

### Example 7 Holmium-Yttrium Hydroxycarbonate Fused Quantum Dot Pigment

The synthesis procedure is almost identical to example 3. One difference is that the precipitant is Na₂CO₃ rather than Na₂S. As a result, hydroxycarbonate quantum dot is formed rather sulfide quantum dot. The maximum calcination temperature for this pigment is 300°C. Above that temperature, hydroxycarbonate is dehydrated and turned into oxide. A typical formulation recipe is given below.

### Formulation Recipe for Quantum Dot Pigment

| Chemical Name | CAS# | Purity | MW | Mole |
|---|---|---|---|---|
| Y(NO₃)₃ • 6H₂O | 13494-98-9 | 99.9% | 383 | 0,0462 |
| Ho(NO₃)₃•5.4H₂O | 10168-82-8 | 99.9% | 448 | 0.0138 |
| NaPO₃* | 68915-31-1 | Prac | 102 | 0.24 |
| | | Gd | | |
| Na₂CO₃ | 497-19-8 | 99.0% | 106 | 0.117 |

| | | | | |
|---|---|---|---|---|
| • Nominal MW RE₂(CO₃)₃ = 393, Expected Final Mass = 11.8g (as carbonate) | | | | |

### Example 8: Holmium-Doped Yttria Ceramic

This particular pigment is simply the dehydrated form of example 7, The pigment from example 7 can be calcined at an extremely high temperature, typically 1000°C to 1500°C, to yield yttria ceramic, which is known for good durability (i.e., solvent and pH resistance) and transparency.

It is noteworthy that Holmium-Doped Yttria Ceramic illustrates the ability to form mixed ceramic compounds that still exhibit an color inconstancy effect. Mixed ceramic compounds such as the one described in the example offer a route to lower cost pigments since Yttrium is significantly less expensive than Holmium. Also note that Examples 7 and 8 are not limited to Holmium-yttria mixtures, but also other lanthides, including but not limited to praseodymium, dysprosium, neodymium, and ytterbium.

### Example 9 Neodymium Phosphate Fused Quantum Dot Pigment

The neodymium phosphate quantum dot has a different color transition, compared to holmium phosphate-sulfide quantum dots. It undergoes a blue-gray to violet transition. The synthesis method is nearly identical to example 1. The typical recipe is given below.

### Formulation Recipe for Fused Quantum Dot Pigment

| Chemical Name | CAS# | Purity | MW | Mole |
|---|---|---|---|---|
| Nd(NO₃)₃·6H₂O | 16454-60-7 | 99.9% | 438 | 0.42 |
| NaPO₃* | 68915-31-1 | Prac Gd | 102 | 1.68 |
| Na₂S.9H₂O | 1313-84-4 | 99.9% | 240 | 0.662 |

| | | | | |
|---|---|---|---|---|
| • Nominal MW Nd₂S₃ = 384, Theoretical Final Mass = 80.6g • [Na₂S] =0.5M, Phosphate:Nitrate=4:1, Na₂S:RE = 3.15:2 with 5% excess | | | | |

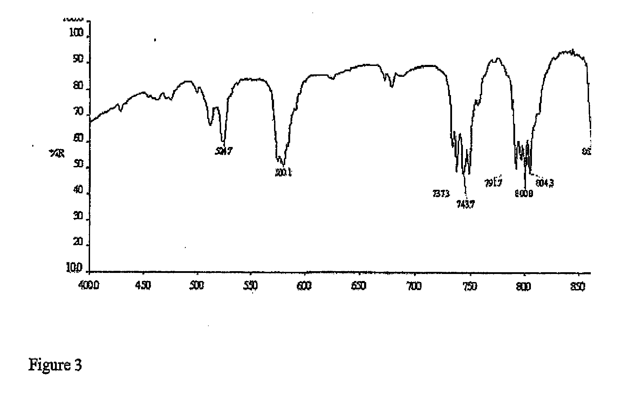

Attenuated Total Reflectance Spectrum ofNd phosphate based Fused Quantum Dot Pigment is shown in Figure 3.

### Example 10 Ho₂O₃ Quantum Dot Pigment

Holmium oxide quantum dots are prepared in chilled ethanol by precipitation of an alcoholic solution of holmium nitrate (6.95g in a saturated solution) using LiOH (0.84g in 200ml EtOH) in a manner similar to the preperation of ZnO quantum dots as described by Zhou, Alves, et al. (Phys. Stat. Sol. (b) 229 No. 2, pp. 825-828, 2002). Sodium hexametaphosphate (1.14g) is added as a sequestering agent to assist in formation of small particles. The resulting material exhibits the ultra-color inconstancy effect with a pink-yellow transition, based upon illumination wavelength. Note: The term "sequestering agent" is used to define a chemical entity that can cover part of another material and render it stable and soluble. In the present case, the agent prevents the formation of agggregates to maintain a smaller particle size. Other agents that can act as sequestering agents are chelates such as citrate. EDTA, crown ethers and some amine compounds as well. Surface active agents in general may be considered "sequestering agents".

### Example 11 Praseodymium Phospate/Sulfide Quantum Dot Pigment

Praseodymium phosphate quantum dots are prepared according to the method of example 1, The color transition of the resulting material is a pale green in outdoor light to a weak grey-yellow in triphosphor light,

### Example 12 Mixed Rare Earth Phospate Quantum Dot Pigments

Rare earths made by methods described in the earlier examples are mixed to produce different color effects. The examples below provide the color transitions observed with different ratios of rare earth metals,

| **Ratio of Fused QD pigments** | **Observed color transition (from tri-phosphor to daylight)** |
|---|---|
| 2 Ho / 1 Pr | pink (triphophor) to light grey (daylight) |
| 1 Ho / 2 Pr | pale pink (triphosphor) to light grey (daylight) |
| 2 Nd / 1 Ho | pink to violet |

### Example 13 Dysprosium Phosphate Quantum Dot Pigment

Dysprosium Phosphate is made by the method used in example 1 (replacing the Holmium nitrate with Dysprosium nitrate at equal molar quantity). The resulting fused quantum dot pigments are useful as a multi-peak near-infrared absorber in the range between 800 ~ 1400nm.

### Example 14 Ytterbium Quantum Dot Pigment

Ytterbium sulphide/phosphate quantum dots are made by the method of example 1 (replacing Holmium nitrate with Ytterbium nitrate). The resulting pigment may be useful as a multi-peak near-infrared absorber with absorption peaks at about 954 and 977 nm.

### Example 15 General scale-up procedures

A slightly modified procedure is used to recover the material when made on a larger scale. When done on a larger scale (e.g., 5L), filter the QD (quantum dot) crystals after they have precipitated. This takes about 2 days of "aging" for the QD crystals to precipitate. Note that this aging is an optional step in the process. A vacuum filtration funnel is then used to remove as much of the mother liquor as possible (which may take 6-7 hours). Rinse the resulting crystals with ethanol (2x1L). The material is then dried in the oven to yield about 80g of material which is then calcined at high temperature.

### Example 16 Neodymium Oxide quantum dots

Neodymium oxide quantum dots were made using a similar method to the one used to produce the holmium oxide of example 8. Neodymium (III) acetate was dissolved in dry ethanol and precipitated under chilled conditions using tetramethylammonium hydroxide as the base. A small amount of tetraethyl orthosilicate was added to arrest crystal growth by Ostwald ripening. After isolation, the Neodymium oxide quantum dot pigments produced exhibited visible color inconstancy when exposed to an illumination source changing from a broad spectral distribution (such as illuminant D65) and a discrete spectral distribution such as illuminant TL84.

## Claims

1. An optically detectable security taggant comprising a crystalline rare earth doped quantum dot color inconstancy pigment which exhibits a color-change in the visible spectrum when changing the spectral distribution of the light emitted by the illumination sources.

2. The optically detectable security taggant of claim 1 wherein the rare earth doped quantum dot color inconstancy pigment comprises a lanthanide element.

3. The optically detectable security taggant of claim 2 wherein the rare earth doped quantum dot color inconstancy pigment comprises a lanthanide selected from the group consisting of praseodymium, neodymium, holmium, ytterbium, and dysprosium.

4. The optically detectable security taggant of claim 3 wherein the rare earth doped quantum dot color inconstancy pigment comprises phosphate, oxide, sulfide, chloride, fluoride, oxyhalides, carbonates, and hydroxycarbonate salts of the lanthanide elements.

5. The optically detectable security taggant of claim 4 wherein the rare earth doped quantum dot color inconstancy pigment is selected from the group consisting of holmium phosphate, neodymium phosphate, praseodymium phosphate, ytterbium phosphate, and dysprosium phosphate.

6. The optically detectable security taggant according to any one of claims 1 to 5 wherein the crystalline rare earth doped quantum dot color inconstancy pigment is encapsulated.

7. The optically detectable security taggant of claim 6 wherein the encapsulation material is a glass.

8. The optically detectable security taggant of claim 7 wherein the glass is selected from the group consisting of silica or borosilicate.

9. A security article comprising an optically detectable security taggant as defined in any one of claims 1 to 8.

10. The security article of claim 9 wherein the security taggant is incorporated into or onto paper and/or fabric documents, ceramics, plastics, substrates and packaging in forms of inks, coatings, laminates, inserts, and combinations thereof.

11. A method of authenticating an article tagged with an optically detectable security taggant of any one of claims 1 to 8, said method comprising selecting a broad spectral light source for illuminating the security taggant and a discrete spectral light source wherein at least one emission peak of the discrete light source matches the absorption of the color inconstancy pigment.

12. A security ink comprising the optically detectable security taggant of any one of claims 1 to 8 and a photoreactive material which can be visually detected.

13. The security ink of claim 12 wherein the ink is applied to form a visible authentication mark.

14. The security ink of claim 12 wherein the ink is applied to form an invisible authentication mark.

15. The security ink of claim 12 wherein the photoreactive material is selected from the group consisting of UV absorbing materials, near infrared absorbing materials, fluorescent materials, phosphorescent materials, and combinations thereof.

16. The security ink of any one of claims 12 to 15 wherein the taggant has a loading weight from about 20% w/w to about 80% w/w.

17. A product or product packaging having printed thereon the ink as defined in any one of claims 12 to 15 in one or more locations to produce an authentication mark.
